# EUROPEAN PATENT APPLICATION

(11) **EP 4 715 191 A1**
(43) Date of publication of application: **25.03.2026**
(21) Application number: 24275104.8
(22) Date of filing: 18.09.2024
(51) Int. Cl.: F02K 1/76, G05G 5/24

(54) **SOLENOID RATCHET MECHANISM**

(71) Applicant: Rohr, Inc., Chula Vista, CA 91910 (US)
(72) Inventor: HAWKSWORTH, Andrew Robert, Wolverhampton WV10 6QJ (GB); HALDRON, Scott Gary, Wolverhampton WV10 6QJ (GB)
(74) Representative: Dehns

(57) **Abstract**

A lock system (100) for an aircraft thrust reverser (1) is provided and comprises: a lock shaft (150) moveable along a longitudinal axis (102) in a first direction (104) towards an unlocked position and in a second direction (106) towards a locked position; a solenoid (300) having a body (310) and an armature (320); and a ratchet assembly (200). The ratchet assembly (200) comprises a holding pawl (220) comprising a holding pawl pivot point (223) about which the holding pawl (220) is pivotable, and which is fixed relative to the body (310). The ratchet assembly (200) comprises a driving pawl (230) comprising a driving pawl pivot point (233) about which the driving pawl (230) is pivotable, and which is fixed relative to the armature (320). The ratchet assembly also comprises axially spaced ratchet protrusions (242) fixed relative to the lock shaft (150). The armature (320) is configured to move through a solenoid stroke distance towards the body (310) in the first direction (104) on activation of the solenoid (300), and to move back through the solenoid stroke distance away from the body (310) on deactivation of the solenoid (300). The driving pawl (230) is configured to engage with a ratchet protrusion (242) so as to drive movement of the lock shaft (150) in the first direction (104) on movement of the armature (320) in the first direction (104) and to release from engagement with the ratchet protrusion (242) so as to move relative to the lock shaft (150) on movement of the armature (320) in the second direction (106). The holding pawl (220) is configured to allow the lock shaft (150) to move relative to the body (310) when the driving pawl (230) is driving movement of the lock shaft (150), and to engage with a ratchet protrusion (242) so as to limit axial movement of the lock shaft (150) relative to the body (310) while the driving pawl (230) is moving in the second direction (106).

## Description

### TECHNICAL FIELD

The present disclosure relates generally to lock members and in particular to lock systems for thrust reverser components used in an aircraft (e.g. translating thrust reverser cowls).

### BACKGROUND

Thrust reversers are provided on jet engines typically to increase the amount of braking on an aircraft upon landing. When deployed, a thrust reverser will change the direction of thrust of the jet engine such that some or all of the thrust is directed forwards, which acts to slow the aircraft after landing.

There are a number of types of thrust reverser, all of which must be stowed during normal aircraft operation, for example so that the thrust reverser cannot be deployed during take-off or at a cruise altitude and can only be deployed during landing. In order to ensure this, one or more lock members are provided to prevent unwanted deployment of the thrust reverser, and in particular the actuators that move the various parts of the thrust reverser.

Most thrust reverser systems include primary, secondary and tertiary locks. Although this may depend on the particular configuration, the primary locks are typically coupled to the actuators of the thrust reverser, the secondary locks may be coupled to the power drive unit of the actuators and the tertiary locks may be coupled directly to a thrust reverser component (e.g. a translating cowl).

Conventionally, solenoid valves have been used to provide electrically operated tertiary locks used in thrust reversers. These are typically only capable of operating short translations and low loads, since in order to provide longer translations and/or higher loads, the size of the solenoid exceeds the usual specification requirements for aerospace applications. There is therefore a requirement to provide a means of providing electrically operated locks with longer translations but without the corresponding increase in size associated with conventional solenoid usage.

### SUMMARY

According to a first aspect of this disclosure, there is provided a lock system for an aircraft thrust reverser, comprising: a lock shaft moveable along a longitudinal axis in a first direction towards an unlocked position and in a second direction towards a locked position; a solenoid having a body and an armature; and a ratchet assembly comprising: a holding pawl comprising a holding pawl pivot point about which the holding pawl is pivotable, wherein the holding pawl pivot point is fixed relative to the body; a driving pawl comprising a driving pawl pivot point about which the driving pawl is pivotable, wherein the driving pawl pivot point is fixed relative to the armature; and axially spaced ratchet protrusions fixed relative to the lock shaft, wherein the armature is configured to move through a solenoid stroke distance towards the body in the first direction on activation of the solenoid, wherein the armature is configured to move back through the solenoid stroke distance away from the body in the second direction on deactivation of the solenoid, wherein an activation cycle of the solenoid comprises one activation and one deactivation of the solenoid, wherein the driving pawl is configured to engage with a ratchet protrusion so as to drive movement of the lock shaft in the first direction on movement of the armature in the first direction and to release from engagement with the ratchet protrusion so as to move relative to the lock shaft on movement of the armature in the second direction, wherein the holding pawl is configured to allow the lock shaft to move relative to the body when the driving pawl is driving movement of the lock shaft, and to engage with a ratchet protrusion so as to limit axial movement of the lock shaft relative to the body while the driving pawl is moving in the second direction, wherein the lock system is configured to repeat the activation cycle so as to drive the lock shaft in the first direction by a distance corresponding to a number of repetitions of the activation cycle multiplied by the solenoid stroke distance.

In any example of the disclosure, the lock system may comprise a biasing member which biases the lock shaft towards the locked position.

In any example of the disclosure, the driving pawl may be configured to resist the biasing force of the biasing member when engaged with a respective ratchet protrusion.

In any example of the disclosure, the holding pawl may be configured to resist the biasing force of the biasing member when engaged with a respective ratchet protrusion.

In any example of the disclosure, the ratchet protrusions may comprise teeth or toothed protrusions.

In any example of the disclosure, the lock system may comprise a lock body, wherein the lock shaft is moveable relative to the lock body along the longitudinal axis.

In any example of the disclosure, the holding pawl pivot point may be disposed on a holding block which is fixedly attached to the body, such that the holding pawl is pivotably attached to the holding block.

In any example of the disclosure, the driving pawl pivot point may be disposed on a driving block which is fixedly attached to and moveable with the armature such that the driving pawl is pivotably attached to the driving block.

In any example of the disclosure, the ratchet assembly may comprise a release assembly configured such that on engagement by the release assembly, the holding pawl and the driving pawl are released from engagement with the ratchet protrusions.

In any example of the disclosure, the lock system may comprise a ratchet shaft radially outward of and moveable with the lock shaft.

In any example of the disclosure, the axially spaced ratchet protrusions may be provided directly on the lock shaft or the axially spaced ratchet protrusions may be provided on the ratchet shaft.

In any example of the disclosure, the lock system may comprise a slot disposed in the ratchet shaft, and extending parallel to the longitudinal axis, in which the release assembly is slidably disposed.

In any example of the disclosure, the slot may comprise a release interface configured to engage the release assembly such that the release assembly disengages the holding pawl and the ratchet pawl from the ratchet protrusions.

In any example of the disclosure, the ratchet assembly may be a first ratchet assembly and the lock system may comprise a second ratchet assembly.

In any example of the disclosure, the lock system may be a primary, secondary or tertiary lock for an aircraft thrust reverser.

According to a further aspect of this disclosure, there is provided a thrust reverser assembly comprising the lock system as disclosed above.

According to a further aspect of this disclosure, there is provided a method of operating a lock system as disclosed above, the method comprising: activating the solenoid so as to drive the lock shaft in the first direction by a distance corresponding to the solenoid stroke distance; deactivating the solenoid to move the armature and the driving pawl back through the solenoid stroke distance away from the body in the second direction while the holding pawl limits axial movement of the lock shaft relative to the body by engagement with a ratchet protrusion; and repeatedly activating and deactivating the solenoid so as to drive the lock shaft in the first direction by a distance corresponding to a number of repetitions of the activation cycle multiplied by the solenoid stroke distance.

In any example of the disclosure, the method may comprise releasing the lock shaft back to its original position by: activating the solenoid again so as to drive the lock shaft in the first direction such that a release assembly is caused to engage with the holding pawl and the driving pawl, thus releasing the holding pawl and the driving pawl from engagement with the ratchet protrusions.

### BRIEF DESCRIPTION OF DRAWINGS

Certain examples of the disclosure will now be described by way of example only and with reference to the accompanying drawings in which:
Fig. 1 shows a thrust reverser assembly;
Figure 2A is a section view of a lock system in a locked position according to an example of the disclosure;
Figure 2B is an enlarged section view of area A of the solenoid and ratchet assemblies of the lock system of Figure 2A;
Figure 3 is an isometric view of the ratchet assemblies of Figure 2A;
Figure 4A is a section view of the lock system of Figure 2A in an unlocked position;
Figure 4B is an enlarged section view of area B of the solenoid and ratchet assemblies of the lock system of Figure 4A;
Figure 5A is a section view of the lock system of Figure 2A in an unlocked position;
Figure 5B is an enlarged section view of area C of the solenoid and ratchet assemblies of Figure 5A;
Figure 6A is a section view of the lock system of Figure 2A in an unlocked position; and
Figure 6B is an enlarged section view of area D of the solenoid and ratchet assemblies of Figure 6A.

### DETAILED DESCRIPTION

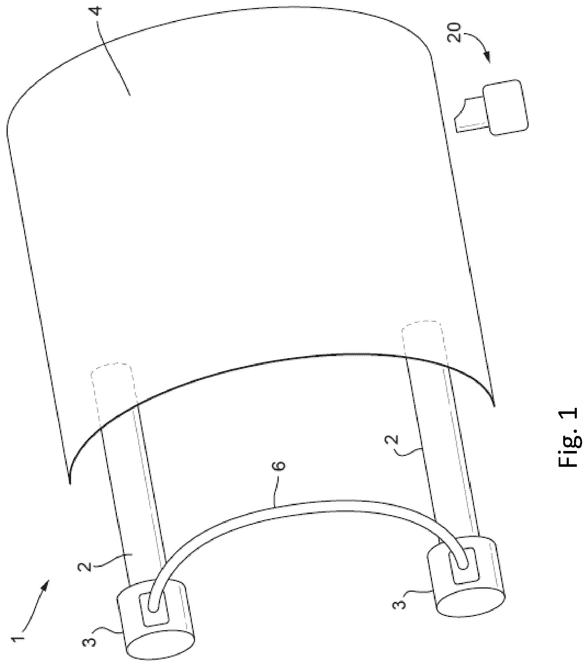

Fig. 1 shows a thrust reverser assembly 1 of an engine (e.g., a jet engine) that comprises a thrust reverser actuation system ("TRAS") in the form of a plurality of actuators 2 that are configured to extend and retract a translating cowl 4. Although a single nacelle cowl is shown, typically two are provided per engine, and any number may be provided to suit a particular application. Similarly, the number of actuators may vary and the arrangement shown in Fig. 1 should be treated as representative of an example only.

One or more primary locks (not shown) may be included in the thrust reverser actuation system, and are typically located within the housing of the actuators 2. The primary locks may be configured to engage the components of the actuator 2 with which they are configured.

The thrust reverser assembly 1 may further comprise part of the nacelle structure of the engine, in this case the translating cowl 4. The thrust reverser assembly 1 may form part of a cascade -type thrust reverser, for example used on a high bypass ratio jet engine. In such an arrangement, the translating cowl 4 may be located on the external surface of the nacelle of the engine. When deployed (i.e., translated from a stowed position to a deployed position), the translating cowl 4 exposes a plurality of cascade vanes, which redirect airflow through the jet engine such that the direction of jet thrust is at least partially reversed.

A power drive unit 3 may be associated with each actuator 2, and may be configured to supply a drive force (e.g., a rotational drive force) to the actuator 2. The actuator 2 may be configured to receive the rotational drive force and, in response thereto, selectively move the translating cowl 4 between its stowed position and deployed position. The power drive units 3 may be operatively connected by a synchronisation mechanism 6, such that the actuators 2 may be driven at substantially the same time.

The lock systems of the present disclosure may be used in many different applications including, but not limited to, lock systems for use in a thrust reverser assembly such as any of the primary and secondary lock systems, which typically engage the components of the actuators or power drive unit of the actuators, respectively, or tertiary lock systems, which are configured to engage the moving parts of the nacelle structure of the engine.

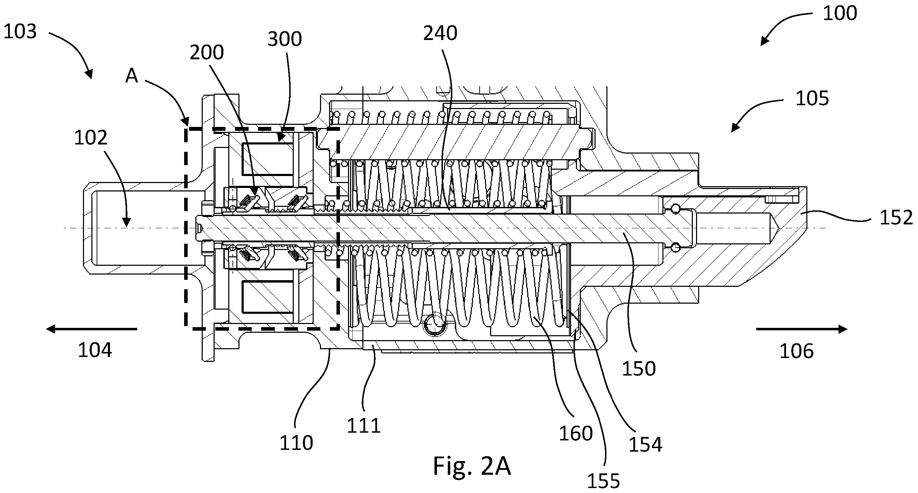

In any example, and referring to the lock system shown in Figure 2A, the disclosure may provide a lock system 100 for an aircraft thrust reverser. The lock system 100 comprises a lock shaft 150 extending along a longitudinal axis 102. The lock shaft 150 can be moved both in a first direction 104 and in a second, opposite direction 106 along the longitudinal axis 102. The lock system 100 may comprise a locking member 152 which is connected to and / or moveable with the lock shaft 150. The locking member 152 is configured to engage with a corresponding feature (not shown) on a thrust reverser actuator to lock actuation (not shown). The shaft 150 is moved in the second direction 106 to a locked position, and in the first direction 104 to an unlocked position. In the locked position, the locking member 152 may be engaged with the corresponding feature on the thrust reverser actuator (not shown).

In some examples, the lock system 100 comprises a lock body 110 and the lock shaft 150 can be moved relative to the lock body 110 in the first direction 104 and the second direction 106. At least in some examples, the lock system 100 comprises a biasing member. In some examples, the lock body 110 comprises a housing 111 surrounding the biasing member. In any example and as shown, the biasing member may comprise a spring 160. The spring 160 may be fixedly attached to and / or extend between a portion of the lock shaft 150 at one end of the spring, and a portion of the lock body 110 at another end of the spring.

In examples, the lock shaft 150 comprises a ratchet shaft 240 disposed on and fixed in relation to the lock shaft 150. The ratchet shaft 240 may be coaxial with and may surround the lock shaft 150 to move axially with the lock shaft 150. In other examples, the ratchet shaft and the lock shaft may form a one-piece component, and the lock shaft may comprise the features of the ratchet shaft disclosed below. In some examples, an end of the spring 160 is fixed relative to the portion of the lock shaft 150 by an abutment surface 154 against which it abuts. In any example, the abutment surface 154 may extend radially outwardly from the lock shaft 150. The abutment surface 154 may be formed by the locking member 152, for example by a flange 155 extending radially outwardly from the locking member 152. The spring 160 applies a force on the abutment surface 154 to bias the lock shaft 150 in the second direction 106. The spring 160 may be a compression spring such that on movement of the lock shaft 150 in the first direction 104, the spring 150 is compressed by corresponding movement of the abutment surface 154 with the lock shaft 150.

A solenoid 300, and a ratchet assembly 200 are provided to move the lock shaft 150 in the first direction 104. In some examples, the ratchet assembly 200 provides features that act against the biasing force of the spring 160. In any example, the lock system 100 may include one or more ratchet assemblies 200. In the example shown, two ratchet assemblies 200 are provided as will be described further below. Other examples may comprise one ratchet assembly, or more than two ratchet assemblies in any chosen arrangement around the lock shaft 150. Section A shows the ratchet assemblies 200 of the lock system 100. The lock body 110 comprises a first end 103 towards which the ratchet assemblies are disposed, and a second end 105 through which the lock shaft 150 protrudes out of the housing 111 to move into a locked position.

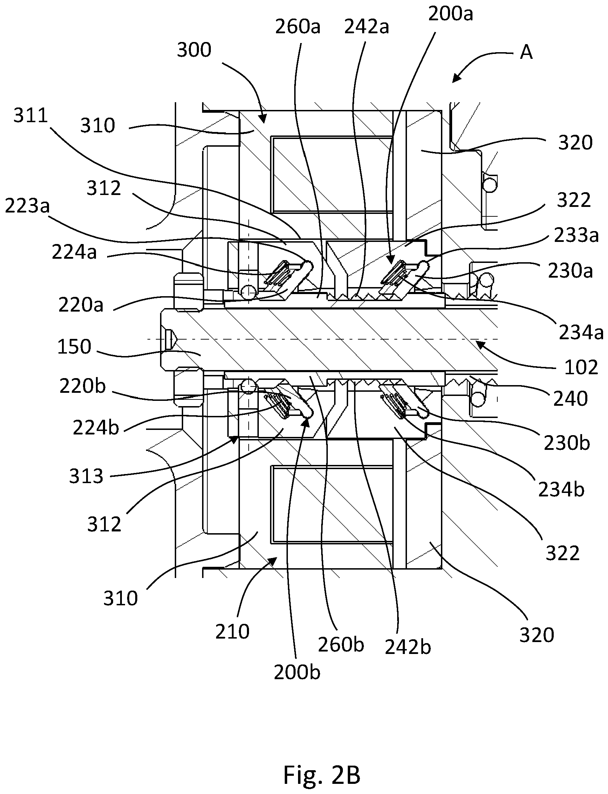

Figure 2B shows the detail A of the solenoid 300 and the ratchet assemblies 200 of Figure 2A. In this example, the lock system 100 comprises one solenoid 300. The solenoid 300 circumferentially surrounds a portion of the lock shaft 150 and the ratchet shaft 240. In this example, the lock system 100 comprises a first ratchet assembly 200a and a second ratchet assembly 200b. The first ratchet assembly 200a is disposed diametrically opposite the second ratchet assembly 200b around the lock shaft 150 in the example shown. In the discussion below, the configuration and the mechanism of the first ratchet assembly 200a will be described. It will be understood that, in any example the configuration and mechanism of further ratchet assemblies may be the same as that of the first ratchet assembly 200a. In the example shown in the drawings therefore, the configuration and mechanism of the second ratchet assembly 200b is the same as that of the first ratchet assembly 200a and all corresponding components have been given the same reference number suffixed by a "b" rather than an "a".

The lock system 100 comprises a solenoid 300. The solenoid 300 comprises a body 310 and an armature 320. The solenoid 300 is arranged along the longitudinal axis 102. In the example shown, the solenoid 300 extends around the longitudinal axis 102. In the example shown, the solenoid body 310 extends around the longitudinal axis 102 to form a toroidal body having a cylindrical opening 313 which is coaxial with the longitudinal axis 102 and formed by a radially inner surface 311 of the solenoid body 310. The armature 320 moves relative to the solenoid body 310 along the longitudinal axis 102 in the first direction 104 towards the body 310 on activation of the solenoid 300 and in the second direction 106 away from the body 310 on deactivation of the solenoid 300. In other examples, the solenoid may be disposed offset from the longitudinal axis. In other examples, a plurality of solenoids may be used.

The first ratchet assembly 200a comprises a holding pawl 220a and a driving pawl 230a. In the example shown, these are arranged between the solenoid 300 and the ratchet shaft 240, for example between the radially inner surface 311 of the solenoid body 310 and the ratchet shaft 240. In any example, the holding pawl 220a comprises a holding pawl pivot point 223a about which the holding pawl 220a is pivotable. In any example, the holding pawl pivot point 223a is fixed relative to the body 310. In any example, the driving pawl 230a comprises a driving pawl pivot point 233a about which the driving pawl 230a is pivotable. In any example, the driving pawl pivot point 233a is fixed relative to the body 310.

In any example of the disclosure, axially spaced ratchet protrusions are provided on the lock shaft 150. The axially spaced ratchet protrusions are configured to engage with at least one holding pawl and at least one driving pawl as will be described further below. In any example of the disclosure, the axially spaced ratchet protrusions may extend radially outwardly from the lock shaft 150. Each ratchet assembly may comprise a set of axially spaced ratchet protrusions for engagement with the holding pawl and the driving pawl of that ratchet assembly.

In any example, the holding pawl pivot point 223a may be fixed to the body 310. In other examples, including the example shown, a holding block 312 is fixedly attached to the body 310. The holding block 312 is between the radially inner surface 311 of the solenoid body 310 and the lock shaft 150. The holding pawl 220a is pivotably attached to the holding block 312 at the holding pawl pivot point 223a. The holding pawl pivot point 223a may comprise a pin or shaft or other attachment means that allows the holding pawl to pivot in relation to the attachment point. The holding pawl 220a may be attached to the holding block 312 at the holding pawl pivot point 223a at or near a first end of the holding pawl 220a. A holding spring 224a or other biasing means extends between the holding pawl 220a and the holding block 312 towards a second end of the holding pawl. The holding spring 224a biases the holding pawl 220a away from the holding block 312 and towards the ratchet shaft 240. In any example, the holding block 312 may extend circumferentially around the lock shaft 150. The holding block may have a substantially toroidal shape. In any example, all the holding pawls of the ratchet assembly (both holding pawls 220a, 220b in the example shown) may be attached to the holding block 312. In other examples, a plurality of holding blocks may be attached to the body 310 and circumferentially distributed around the longitudinal axis. In such examples, each holding pawl may be attached to a respective holding block. In other examples, the lock system comprises two holding blocks arranged diametrically opposite each around the axis 102, and attached to the body 310. In other examples, the holding pawl pivot point 223a may be fixed to any part of the lock body 110 or fixed to any feature of the lock system 100 that does not move in relation to the solenoid body 310.

In any example, the driving pawl pivot point 233a may be fixed to the armature 320. In other examples, including the example shown, a driving block 322 is fixedly attached to the armature 320. The driving block 322 is between the solenoid 300 and the lock shaft 150. The driving pawl 230a is pivotably attached to the driving block 322 at the driving pawl pivot point 233a. The driving pawl pivot point 233a may comprise a pin or shaft or other attachment means that allows the driving pawl to pivot in relation to the attachment point. The driving pawl 230a is attached to the driving block 322 at the driving pawl pivot point 233a at or near a first end of the driving pawl 230a. A driving spring 234a or other biasing means extends between the driving pawl 230a and the driving block 322 towards a second end of the driving pawl. The driving spring 234a biases the driving pawl 230a away from the driving block 322 and towards the ratchet shaft 240. In any example, the driving block322 may extend circumferentially around the lock shaft 150. The driving block may have a substantially toroidal shape. In any example, all the driving pawls of the ratchet assembly (both driving pawls 230a, 230b in the example shown) may be attached to the driving block 322. In other examples, a plurality of driving blocks may be attached to the body 310 and circumferentially distributed around the longitudinal axis. In such examples, each driving pawl may be attached to a respective driving block. In other examples, the lock system comprises two driving blocks arranged diametrically opposite each around the axis 102 and attached to the armature 320.

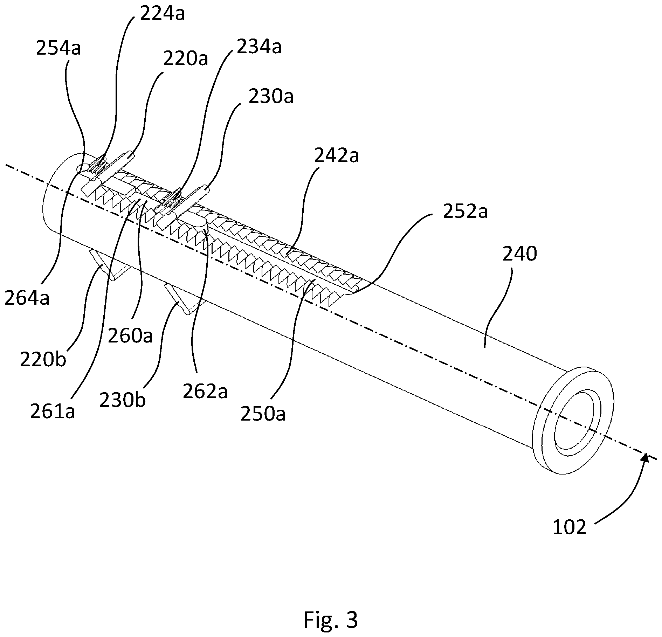

In any example of the disclosure, each ratchet assembly may also comprise a release assembly (as described further below with reference to Figure 3) configured to engage with the holding pawl and the driving pawl such that on engagement by the release assembly, the holding pawl and the driving pawl are released from engagement with the ratchet protrusions. This may allow the lock shaft 150 to move back to the locked position due to the biasing force exerted by the biasing member.

Figure 3 shows the ratchet shaft 240 in isolation from the lock shaft 150 and the lock body 110. This shows the interaction of the holding and driving pawls 220a, 230a, and the release assembly 260a with the ratchet shaft 240. Figure 2B shows the ratchet shaft 240 in situ in the lock system. The ratchet shaft 240 is substantially tubular and arranged to surround a portion of the lock shaft 150 such that the ratchet shaft 240 is fixed to and moveable with the lock shaft 150 along the axis 102. The ratchet shaft 240 comprises a slot 250a extending longitudinally along and through an exterior surface of the ratchet shaft 240. The slot 250 comprises a first axial end forming a release interface 252a and a second axial end forming a reset interface 254a. These interact with the release assembly 260a to release the holding pawl 220a and driving pawl 230a. Axially spaced ratchet protrusions 242a are disposed longitudinally either side of the slot 250a. The ratchet protrusions 242a extend the length of the slot 250a. In other examples, the ratchet shaft may comprise a feature having a different shape that allows engagement of the release assembly, holding and driving pawls. The ratchet protrusions 242 are shaped to engage with the holding and driving pawls 220a, 230a such that they provide a ratchet function. In this example, the ratchet protrusions 242a comprise teeth of corresponding dimensions to the second ends of the holding and driving pawls 220a, 230a. The holding and driving pawls 220a, 230a are attached to their respective holding and driving blocks 312, 322 such that relative movement of the ratchet protrusions 242a and the ratchet shaft 240 in the first direction allows the holding and driving pawls 220a, 230a to move over the ratchet protrusions 242a. Relative movement of the ratchet protrusions 242a and the ratchet shaft 240 in the second direction is prevented when either of the holding pawl 220a or driving pawl 230a is engaged with one of the ratchet protrusions 242a.

The release assembly 260a is disposed in and slidable along the slot 250a. The release assembly 260a may be supported on an external surface of the lock shaft 150 and is axially moveable relative to the ratchet shaft 240 and the lock shaft 150. In other examples, the lock system may comprise a release collar (not shown) on which one or more release assemblies are fixed. The release collar is disposed on and surrounds the lock shaft and is arranged such that the release assemblies protrude through their respective slots. The release collar may allow the release assembly to be movably disposed on the lock shaft in relation to the ratchet shaft and solenoid.

The release assembly 260a extends longitudinally and comprises a release interface 262a at a first axial end thereof which interacts with the release interface 252a on the slot 250a when in contact therewith, and a reset interface 264a at a second axial end thereof which interacts with the reset interface 254a on the slot 250a when in contact therewith. A radially outer surface 261a of the release assembly 260a is positioned radially internally of or level with the base of the ratchet protrusions 242a. The release assembly 260a comprises a holding shoulder 266a protruding radially outwardly from the radially outer surface 261a. The holding shoulder 266a may engage with the holding pawl 220a on activation of the release assembly 260a. The release assembly 260a comprises a driving shoulder 268a protruding radially outwardly from the radially outer surface 261a. The driving shoulder 268a may engage with the driving pawl 230a on activation of the release assembly 260a. The activation of the release assembly 260a will be described below. In Figure 3, the release assembly 260a is shown in a position in which it is not engaged with the holding and driving pawls 220a, 230a and is disposed towards the first end 103 of the slot 250.

The slot 250a, the ratchet protrusions 242a and the release assembly 260a form part of the ratchet assembly 200a.

The above features will now be described in relative motion to move the lock system 100 between the locked position and the unlocked position. The lock system 100 can be taken to have two operational phases: an unlocking phase and a locking phase. During the unlocking phase, the solenoid 300 is being repeatedly activated and deactivated through multiple activation cycles to move the lock shaft 150 in the first direction 104. During the unlocking phase, the lock shaft is moved by a desired distance (a lock stroke or locking distance) corresponding to a set number of repetitions of the activation cycle multiplied by the solenoid stroke distance. Once the unlocking phase has been completed and the lock shaft has moved through the lock stroke, the locking phase begins with a final activation of the solenoid 300. In this final activation of the solenoid 300, activation of the solenoid moves the ratchet shaft 240 in the first direction 104 such that the release assembly 260 is moved to release the holding and driving pawls 220a, 230a to allow the spring 160 to bias the lock shaft 150 in the second direction 106. The final activation of the solenoid brings the release interface 252a on the slot 250a into contact with the release interface 262a on the release assembly 260a to move the release assembly 260 to engage with the holding and driving pawls 220a, 230a and so release them from the ratchet protrusions.

Figure 2A shows the lock system 100 in a locked position, after the locking phase has occurred, and before the unlocking phase has started. The locking member 152 has been moved by the lock shaft 150 in the second direction 106 to the second end 105 of the lock system 100 during the locking phase. The spring 160 is in an extended position which has fully biased the lock shaft 150 to the locked position. Figure 2B shows the ratchet assembly 200a when the armature 320 is in a position away from the body 310. In this example, when the solenoid 300 is activated, the armature 320 is moved towards the body 310 in the first direction 104 towards the first end 103, and when the solenoid 300 is deactivated, the armature 320 is moved away from the body 310a in the second direction 106 towards the second end 105. In other examples, the activation of the solenoid may cause movement of the armature in the second direction, and deactivation may cause movement of the armature in the first direction.

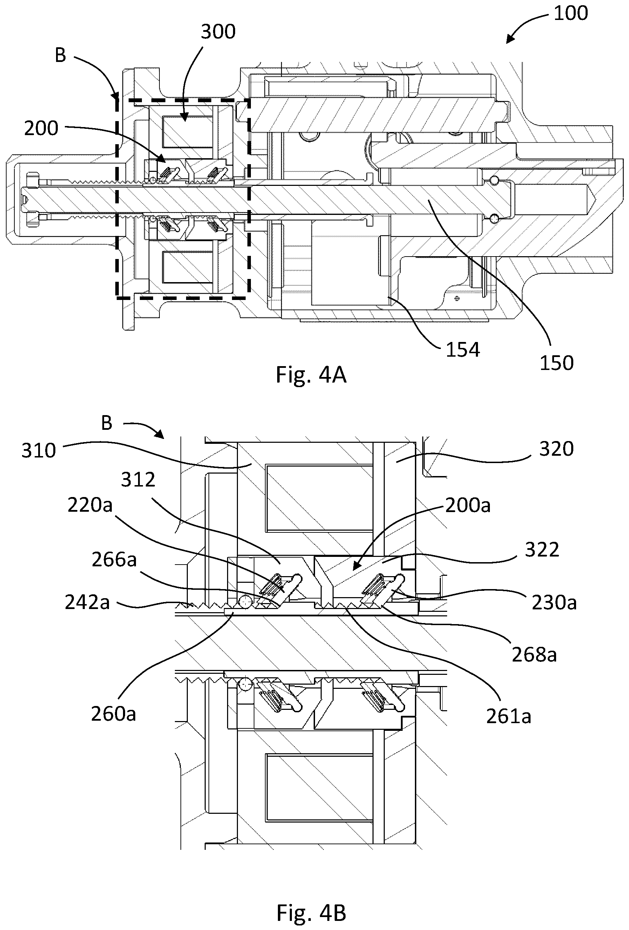

Figure 4A shows the lock system 100 in an unlocked position after the unlocking phase has occurred, and before the locking phase has started. The lock shaft 150 is moved from the locked position of Figure 2A to the unlocked position of Figure 4A during the unlocking phase by a plurality of activation cycles of the ratchet assembly 200a. The ratchet assembly 200a works to resist the biasing force of the spring 160 to move the lock shaft 150. The spring 160 is not shown in Figures 4A to 6B for reasons of clarity of the Figures, however the skilled person would understand the action of the spring in these Figures. In Figures 4A to 6B the spring 160 has been compressed along the axis 102 so as to be in a compressed state. The spring is compressed by the abutment surface 154 which has been moved in the first direction 104 by movement of the lock shaft 150 in the first direction 104 by a distance corresponding to a number of repetitions of the activation cycle of the ratchet assembly 200 multiplied by the solenoid stroke distance as will be described further below.

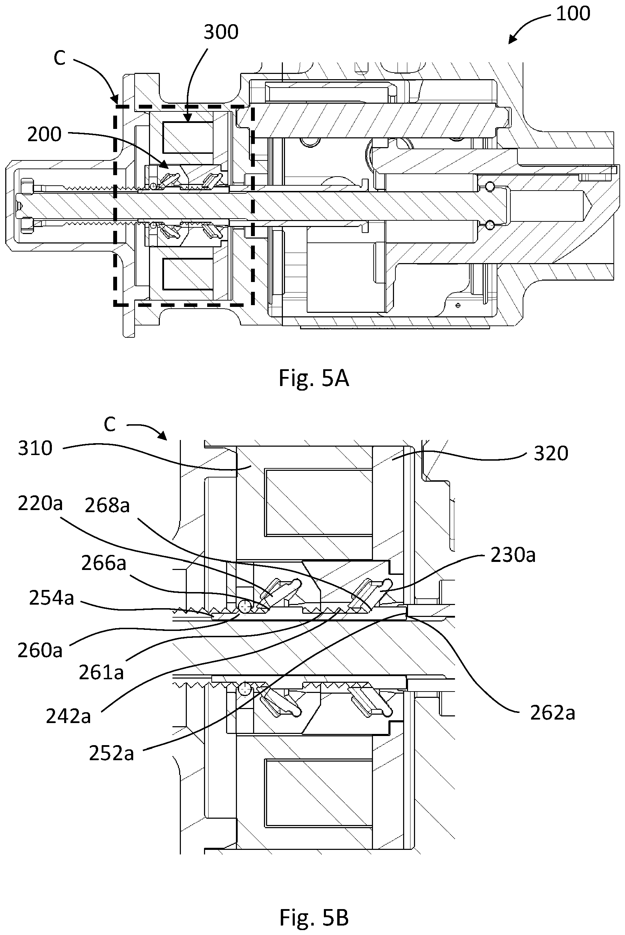

Figures 4A and 4B show the lock system 100 before the final activation of the solenoid 300, and before the locking phase has started. Figures 5A and 5B shows the lock system 100 after activation of the solenoid 300. The solenoid 300 is activated such that the armature 320 is moved towards the body 310 in the first direction 104. The driving block 322 and therefore the driving pawl 230a move with the armature 320 in the first direction 104. Movement of the armature 320 in the first direction 104 drives the ratchet shaft 240 in the first direction 104 due to the engagement between the driving pawl 230a and the ratchet protrusions 242a on the ratchet shaft 240. The ratchet shaft 240 is driven in the first direction 104 by a distance that corresponds to the stroke of the solenoid 300 (the solenoid stroke distance). As the holding pawl 220a is fixed in relation to the solenoid body 310, the holding pawl 220a does not move with the ratchet shaft 240 when it is being driving by the driving pawl 230a. Instead, the holding pawl 220a slides over the ratchet protrusions 242a due to their ratchet-toothed shape, to allow the ratchet shaft 240 to move in the first direction 104. Once the solenoid 300 has performed the activation stroke, the holding pawl 220a is biased into engagement with another ratchet protrusion 242a. When the solenoid is deactivated, the holding pawl 220a is in engagement with the ratchet protrusions 242a to resist the biasing force of the spring 160.

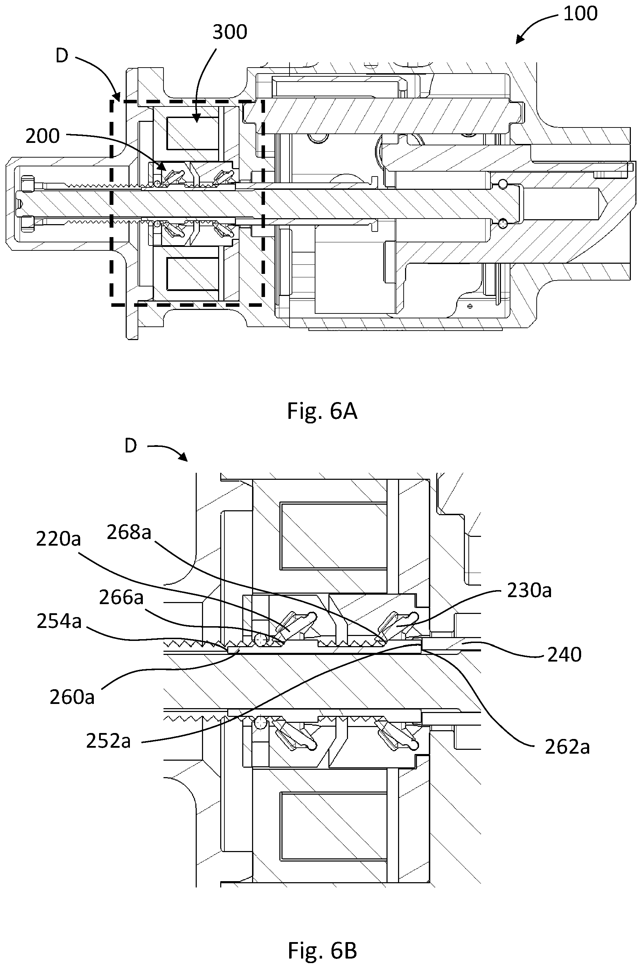

Figures 5A and 5B show the start of the locking phase, with the initial release of the holding pawl 220a, and Figures 6A and 6B show the locking phase once both the holding and driving pawls 220a, 230a have been released, before the lock shaft 150 is moved by the biasing force from the spring.

Figures 5A and 5B show the lock system 100 in an unlocked position, at the start of the locking phase. The solenoid 300 is at the end of its final activation stroke. The solenoid 300 is in an activated position, where the armature 320 is in contact with or close to the body 310. Figures 4A and 4B show the lock system 100 after deactivation of the solenoid 300, where the solenoid 300 is in a deactivated position, with the armature 320 being a distance from the body 310. On deactivation of the solenoid 300, the armature 320 moves in a second direction 106 away from the solenoid body 310. This causes corresponding movement of the driving block 322 and driving pawl 230a in the second direction 106. The driving pawl 230a slides over the ratchet protrusions 242a to allow relative movement of the driving pawl 230a in relation to the fixed ratchet shaft 240. Once the solenoid 300 has performed the deactivation stroke, the driving pawl 230a is biased into engagement with another ratchet protrusion 242a. The activation and subsequent deactivation of the solenoid 300 counts as one activation cycle of the solenoid 300. One activation cycle moves the lock shaft 150 a distance corresponding to the stroke length of the solenoid 300. The activation cycle is repeated a plurality of times so as to move the lock shaft 150 and locking member 152 a required distance in the first direction 104 as part of the unlocking phase. Once the desired number of cycles has been completed as part of the unlocking phase, and the lock shaft 150 has travelled the required distance, the locking phase is initiated by the final activation stroke of the solenoid 300.

A final activation stroke of the solenoid 300 is shown in Figures 5A, 5B, 6A and 6B. On the final activation stroke of the solenoid 300, the release interface 252a at the second end of the slot 250a is brought into contact with the release interface 262a on the release assembly 260a by the driving engagement of the driving pawl 230a with the ratchet shaft 240. The release interface 252a on the slot contacts the release interface 262a on the release assembly 260a to move the release assembly 260a in the first direction relative to the solenoid body 310. As the release assembly 260a is moved in the first direction 104, the driving shoulder 268a engages with the driving pawl 230a so that the driving pawl 230a is brought out of engagement with the ratchet protrusions 242a. The movement of the release assembly 260a also brings the holding shoulder 266a into engagement with the holding pawl 220a such that the holding pawl 220a is also brought out of engagement with the ratchet protrusions 242a. The disengagement of both of the holding and driving pawls 220a, 230a allows for the lock shaft 150 and ratchet shaft 240 to be moved in the second direction 106 by the spring 160 to return to the locked position. When the holding and driving pawls 220a, 230a are released from engagement with the ratchet protrusions 242a, the spring 160 biases the lock shaft 150 and ratchet shaft 240 to the locked position. The release assembly 260a remains fixed with the solenoid 300 in relation to the lock shaft 150 and ratchet shaft 240 during this step. Towards the end of the movement of the lock shaft 150 and ratchet shaft 240 in the second direction 106, the reset interface 254a at the first end of the slot 250a is brought into contact with the reset interface 264a on the slot 250a. This contact and movement of the ratchet shaft 240 and slot 250a in the second direction 106 moves the release assembly 260a in the second direction 106 with the lock shaft 150 relative to the solenoid 300. This movement of the release assembly 260a in the second direction 106 disengages the holding shoulder 266a and the driving shoulder 268a from the driving pawl 230a and the holding pawl 220a respectively, such that the holding and driving pawls 220a, 230a engage with the ratchet protrusions. This step returns the lock system 100 to the state shown in Figure 2A and 2B.

A method of operating a lock system 100 according to any of the examples described above includes activating the solenoid 300, causing the ratchet assemblies 200a and 200b to drive the lock shaft 150 in the first direction 104 by a distance corresponding to the solenoid stroke distance. The solenoid is then deactivated to move the armature 320 and the driving pawls 230a, 230b back through the solenoid stroke distance away from the body 310 in the second direction 106 while the holding pawls 220a, 220b limit axial movement of the lock shaft relative to the body by engagement with a respective ratchet protrusion. The solenoid 300 is repeatedly activated and deactivated so as to drive the lock shaft 150 in the first direction 104 through the lock stroke by a distance corresponding to a number of repetitions of the activation cycle multiplied by the solenoid stroke distance. The repeated activation and deactivation corresponds to the unlocking phase. The locking phase is then initiated to release the lock shaft 150 back to its original position. The method includes activating the solenoid 300 again once more, causing the ratchet assembly 200a to drive the lock shaft 150 in the first direction 104 such that each release assembly 260a, 260b is caused to engage with the holding pawls 220a, 220b and the driving pawls 230a, 230b, thus releasing the holding pawls and the driving pawls from engagement with the ratchet protrusions 242a, 242b. The release of holding and driving pawls 220, 230 from engagement with the ratchet protrusions 242 is shown in Figures 5B and 6B. The release of the holding and driving pawls 220, 230 from engagement with the ratchet protrusions 242 allows for the spring 160 to exert a biasing force on the abutment surface 154 to move the lock shaft 150 and the locking member in the second direction 106 towards the locked position shown in Figure 2A. As with any of the examples described above, this method can be performed with a single ratchet assembly 200a, or with two ratchet assemblies 200a, 200b as depicted in the Figures, and one solenoid 300. In other embodiments, two or more ratchet assemblies may be used with one solenoid.

The unlocking and locking phases of the lock system 100 may be repeated as required to engage and disengage components of the actuators 2 in the thrust reverser assembly 1. The use of the solenoid 300 and ratchet assembly 200 allows for the lock shaft 150 to be moved by a multiple of the solenoid stroke length. This allows the lock shaft to move a longer distance than is possible by direct drive from the solenoid alone. A smaller, lighter solenoid can be used to obtain the required lock shaft travel distance.

While the disclosure has been described in detail in connection with only a limited number of examples, it should be readily understood that the disclosure is not limited to such disclosed examples. Rather, the disclosure can be modified to incorporate any number of variations, alterations, substitutions or equivalent arrangements not heretofore described, but which are commensurate with the scope of disclosure. Additionally, while various examples of the disclosure have been described, it is to be understood that aspects of the disclosure may include only some of the described examples. Accordingly, the disclosure is not to be seen as limited by the foregoing description, but is only limited by the scope of the appended claims.

## Claims

1. A lock system for an aircraft thrust reverser, comprising:
a lock shaft moveable along a longitudinal axis in a first direction towards an unlocked position and in a second direction towards a locked position;
a solenoid having a body and an armature; and
a ratchet assembly comprising:
a holding pawl comprising a holding pawl pivot point about which the holding pawl is pivotable, wherein the holding pawl pivot point is fixed relative to the body;
a driving pawl comprising a driving pawl pivot point about which the driving pawl is pivotable, wherein the driving pawl pivot point is fixed relative to the armature; and
axially spaced ratchet protrusions fixed relative to the lock shaft,
wherein the armature is configured to move through a solenoid stroke distance towards the body in the first direction on activation of the solenoid,
wherein the armature is configured to move back through the solenoid stroke distance away from the body in the second direction on deactivation of the solenoid,
wherein an activation cycle of the solenoid comprises one activation and one deactivation of the solenoid,
wherein the driving pawl is configured to engage with a ratchet protrusion so as to drive movement of the lock shaft in the first direction on movement of the armature in the first direction and to release from engagement with the ratchet protrusion so as to move relative to the lock shaft on movement of the armature in the second direction,
wherein the holding pawl is configured to allow the lock shaft to move relative to the body when the driving pawl is driving movement of the lock shaft, and to engage with a ratchet protrusion so as to limit axial movement of the lock shaft relative to the body while the driving pawl is moving in the second direction,
wherein the lock system is configured to repeat the activation cycle so as to drive the lock shaft in the first direction by a distance corresponding to a number of repetitions of the activation cycle multiplied by the solenoid stroke distance.

2. The lock system of claim 1, comprising a biasing member which biases the lock shaft towards the locked position.

3. The lock system of claim 2, wherein the driving pawl is configured to resist the biasing force of the biasing member when engaged with a respective ratchet protrusion; and / or
wherein the holding pawl is configured to resist the biasing force of the biasing member when engaged with a respective ratchet protrusion.

4. The lock system of any preceding claim, wherein the ratchet protrusions comprise teeth or toothed protrusions.

5. The lock system of any preceding claim, comprising a lock body, wherein the lock shaft is moveable relative to the lock body along the longitudinal axis.

6. The lock system of any preceding claim, wherein the holding pawl pivot point is disposed on a holding block which is fixedly attached to the body, such that the holding pawl is pivotably attached to the holding block, and /or
wherein the driving pawl pivot point is disposed on a driving block which is fixedly attached to and moveable with the armature such that the driving pawl is pivotably attached to the driving block.

7. The lock system of any preceding claim, wherein the ratchet assembly comprises a release assembly configured such that on engagement by the release assembly, the holding pawl and the driving pawl are released from engagement with the ratchet protrusions.

8. The lock system of claim 7, comprising a ratchet shaft radially outward of and moveable with the lock shaft.

9. The lock system of claim 8, comprising a slot disposed in the ratchet shaft, and extending parallel to the longitudinal axis, in which the release assembly is slidably disposed.

10. The lock system of claim 9, wherein the slot comprises a release interface configured to engage the release assembly such that the release assembly disengages the holding pawl and the ratchet pawl from the ratchet protrusions.

11. The lock system of any preceding claim, wherein the ratchet assembly is a first ratchet assembly and the lock system comprises a second ratchet assembly.

12. The lock system of any preceding claim, wherein the lock system is a primary, secondary or tertiary lock for an aircraft thrust reverser.

13. A thrust reverser assembly comprising the lock system as claimed in any preceding claim.

14. A method of operating a lock system as claimed in any of claims 1 to 12, the method comprising:
activating the solenoid so as to drive the lock shaft in the first direction by a distance corresponding to the solenoid stroke distance;
deactivating the solenoid to move the armature and the driving pawl back through the solenoid stroke distance away from the body in the second direction while the holding pawl limits axial movement of the lock shaft relative to the body by engagement with a ratchet protrusion; and
repeatedly activating and deactivating the solenoid so as to drive the lock shaft in the first direction by a distance corresponding to a number of repetitions of the activation cycle multiplied by the solenoid stroke distance.

15. A method of operating a lock system as claimed in claim 14, comprising releasing the lock shaft back to its original position by:
activating the solenoid again so as to drive the lock shaft in the first direction such that a release assembly is caused to engage with the holding pawl and the driving pawl, thus releasing the holding pawl and the driving pawl from engagement with the ratchet protrusions.
